# EUROPEAN PATENT APPLICATION

(11) **EP 4 120 444 A1**
(43) Date of publication of application: **18.01.2023**
(21) Application number: 21767614.7
(22) Date of filing: 22.02.2021
(51) Int. Cl.: H01M 50/10, H01G 2/02, H01G 2/08, H01G 4/38, H01G 9/008, H01G 11/10, H01G 11/74, H01M 10/613, H01M 10/625, H01M 50/20, H01M 50/50, H01M 50/543

(54) **ELECTRICITY STORAGE DEVICE, ELECTRICITY STORAGE DEVICE ASSEMBLY, AND MOVING BODY**

(30) Priority: 13.03.2020 JP 2020044669
(71) Applicant: DAI NIPPON PRINTING CO., LTD., Tokyo 162-8001 (JP)
(72) Inventor: FUKUDA Jun, Tokyo 162-8001 (JP)
(74) Representative: Müller-Boré & Partner Patentanwälte PartG mbB
(86) International application number: PCT/JP2021/006592
(87) International publication number: WO 2021/182092

(57) **Abstract**

An electricity storage device capable of high-output discharging and high-speed charging is provided. An electricity storage device 10 has an electricity storage element 11 sealed in a package member 20 of a laminate material including a thermal adhesive resin layer 38. The package member 20 has a housing portion 16 having a substantially rectangular opening 16a and formed to have a predetermined depth; a flange portion 17 protruding outward from the circumferential edge of the opening 16a; and a lid portion 18 covering the opening 16a and thermally bonded to the flange portion 17. The electricity storage element 11 has a pair of electrode terminals 12 and 13 protruding respectively from opposite longer-side edges of the opening 16a and held between the flange portion 17 and the lid portion 18.

## Description

### Technical Field

The present invention relates to electricity storage devices, and also relates to electricity storage device stacks and mobile bodies that employ electricity storage devices.

### Background Art

A known electricity storage device is disclosed in Patent Document 1. This electricity storage device has an electricity storage element sealed in a package member. The electricity storage element has a cathode plate and an anode plate disposed opposite each other across a separator, with an electrolyte filling between the cathode and anode plates. The cathode and anode plates have electrode terminals connected to them respectively, with the electrode terminals protruding out of the package member.

### Citation List

### Patent Literature

Patent Document 1: JP 3852110 (pp. 3-5; Fig. 1)

### Summary of Invention

### Technical Problem

Inconveniently, with the known electricity storage device mentioned above, as the distance between the opposed electrode terminals increases, the internal resistance of the electricity storage element increases. This results in a drop in output during discharging, and in a prolonged time to complete charging.

An object of the present invention is to provide an electricity storage device capable of high-output discharging as well as high-speed charging, and to provide an electricity storage device stack and a mobile body employing such an electricity storage device.

### Solution to Problem

To achieve the above object, according to one aspect of the present invention, an electricity storage device has an electricity storage element sealed in a package member formed of a laminate material including a thermal adhesive resin layer. The package member has: a housing portion having in one face of it a substantially rectangular opening and formed to have a predetermined depth, for housing the electricity storage element; a flange portion protruding outward from a circumferential edge of the opening; and a lid portion covering the opening and thermally bonded to the flange portion. The electricity storage element has a pair of electrode terminals protruding outward respectively from opposite longer-side edges of the opening and held between the flange portion and the lid portion.

According to another aspect of the present invention, in an electricity storage device configured as described above, a width of the electrode terminals may be greater than one-half of a dimension of the opening along its longer-side direction.

According to another aspect of the present invention, in an electricity storage device configured as described above, a dimension of the opening along its longer-side direction may be 1.5 times or more but 30 times or less of a dimension of the opening along its shorter-side direction.

According to another aspect of the present invention, in an electricity storage device configured as described above, a width of the electrode terminals may be 5 cm or more but 100 cm or less.

According to another aspect of the present invention, in an electricity storage device configured as described above, the electrode terminals may protrude from an outer edge of the flange portion by 0.5 mm or more but 50 mm or less.

According to another aspect of the present invention, in an electricity storage device configured as described above, a machine direction of the package member may be orthogonal to a width direction of the electrode terminals.

According to another aspect of the present invention, an electricity storage device stack includes: a plurality of electricity storage devices configured as described above arranged side by side along a depth direction of the housing portion; and a circuit board electrically connected to the electrode terminals arrayed along the depth direction of the housing portion. The circuit board has: slits through which the electrode terminals are inserted; and an electrode pattern electrically connected to the electrode terminals inserted through the slits.

According to another aspect of the present invention, in an electricity storage device stack configured as described above, tip parts of the electrode terminals protruding through the slits may be bent to be electrically connected to the electrode pattern.

According to another aspect of the present invention, in an electricity storage device stack configured as described above, there may be further provided a cooling plate having inside it a refrigerant passage through which refrigerant is circulated. The cooling plate may be disposed over the circuit board so as to lie in contact with or close to the electrode terminals.

According to another aspect of the present invention, a mobile body includes: an electricity storage device stack configured as described above; and a driving motor supplied with electric power from the electricity storage device stack. The mobile body is driven by the driving motor. The depth direction of the housing portion is aligned with a front-rear direction of a body of the mobile body. A longer-side direction of the opening is aligned with a left-right direction of the body of the mobile body. A shorter-side direction of the opening is aligned with a height direction of the body of the mobile body.

According to another aspect of the present invention, a mobile body includes: an electricity storage device stack configured as described above; and a driving motor supplied with electric power from the electricity storage device stack. The mobile body is driven by the driving motor. The depth direction of the housing portion is aligned with a left-right direction of a body of the mobile body. A longer-side direction of the opening is aligned with a front-rear direction of the body of the mobile body. A shorter-side direction of the opening is aligned with a height direction of the body of the mobile body.

According to another aspect of the present invention, a mobile body includes: an electricity storage device stack configured as described above; and a driving motor supplied with electric power from the electricity storage device stack. The mobile body is driven by the driving motor. The depth direction of the housing portion is aligned with a height direction of the body of the mobile body.

### Advantageous Effects of Invention

According to the present invention, a housing portion of a package member in which an electricity storage element is housed has in one face of it a substantially rectangular opening and is covered by a lid portion. The electricity storage element has a pair of electrode terminals protruding outward from opposite longer-side edges of the opening. This makes it possible to fabricate the electricity storage element with a reduced distance between the opposed electrode terminals. This helps reduce the internal resistance of the electricity storage element during charging and discharging, and it is thus possible to provide an electricity storage device capable of high-output discharging and high-speed charging, and to provide an electricity storage device stack and a mobile body that employ such an electricity storage device. Moreover, the electrode terminals can be formed with a larger width in proportion to the dimension of the opening along its longer-side direction, and this increases electrical conductivity. It is thus possible to apply a higher voltage and further reduce the charging time. It is also possible to reduce heat generation in the electrode terminals and in the electricity storage element and alleviate their deterioration.

### Brief Description of Drawings

Fig. 1 is a side view of an electric vehicle according to a first embodiment of the present invention.
Fig. 2 is a top view of the electric vehicle according to the first embodiment of the present invention.
Fig. 3 is a perspective view of an electricity storage device stack in the electric vehicle according to the first embodiment of the present invention.
Fig. 4 is a perspective view of the electricity storage device stack in the electric vehicle according to the first embodiment of the present invention.
Fig. 5 is a sectional side view of the electricity storage device stack in the electric vehicle according to the first embodiment of the present invention
Fig. 6 is a perspective view of an electricity storage device in the electric vehicle according to the first embodiment of the present invention.
Fig. 7 is an exploded perspective view of the electricity storage device in the electric vehicle according to the first embodiment of the present invention.
Fig. 8 is a sectional view showing the layered structure of a packing material for a package member of the electricity storage device in the electric vehicle according to the first embodiment of the present invention.
Fig. 9 is a diagram illustrating a procedure of fabricating the electricity storage device in the electric vehicle according to the first embodiment of the present invention.
Fig. 10 is a diagram illustrating a modified example of the procedure of fabricating the electricity storage device in the electric vehicle according to the first embodiment of the present invention.
Fig. 11 is an exploded perspective view of an electricity storage device in an electric vehicle according to a second embodiment of the present invention.
Fig. 12 is a top view of an electric vehicle according to a third embodiment of the present invention.

### Description of Embodiments

### < First Embodiment >

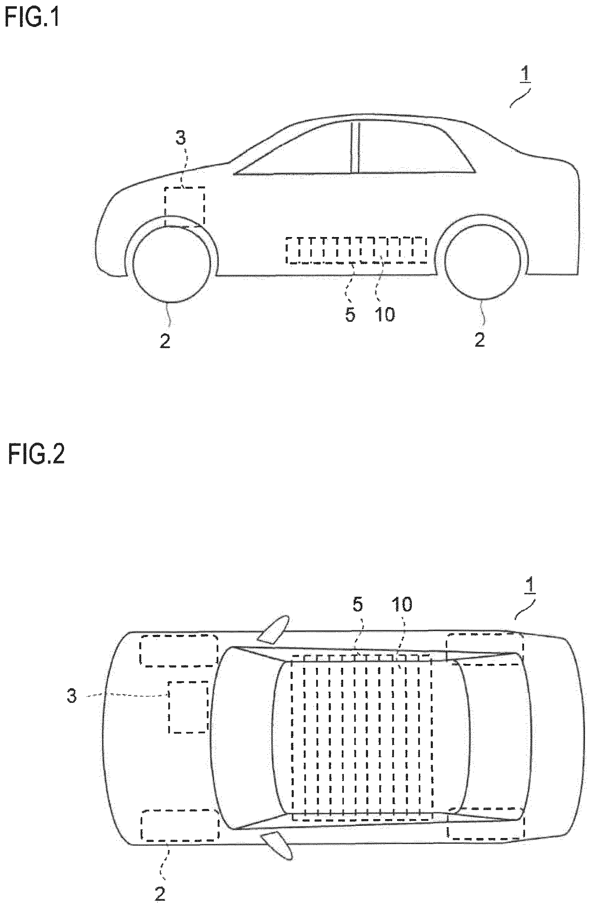

Embodiments of the present invention will be described below with reference to the accompanying drawings. Figs. 1 and 2 are a side view and a top view, respectively, of an electric vehicle according to a first embodiment. The electric vehicle (mobile body) 1 includes a driving motor 3 as a motive power source for driving wheels 2. The Under the floor of the body of the electric vehicle 1 (the body of the mobile body), an electricity storage device stack 5 is installed as a driving source for supplying the driving motor 3 with electric power.

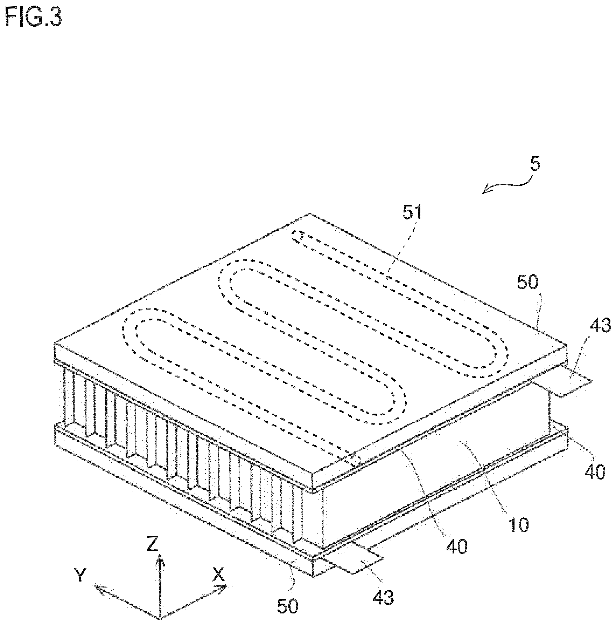

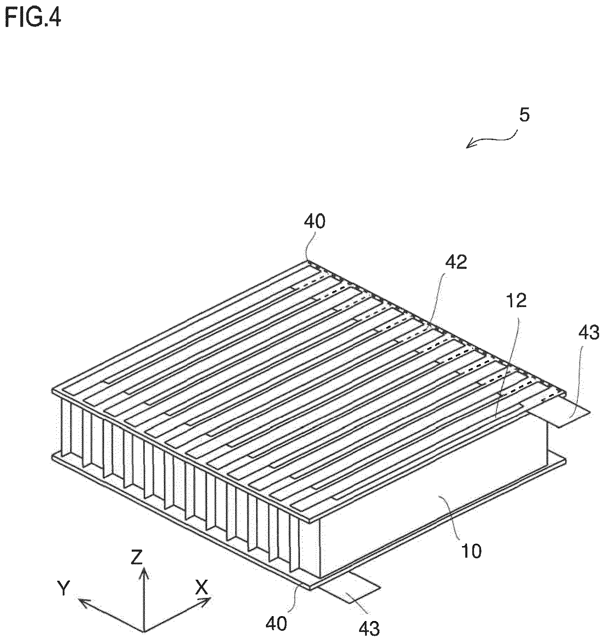

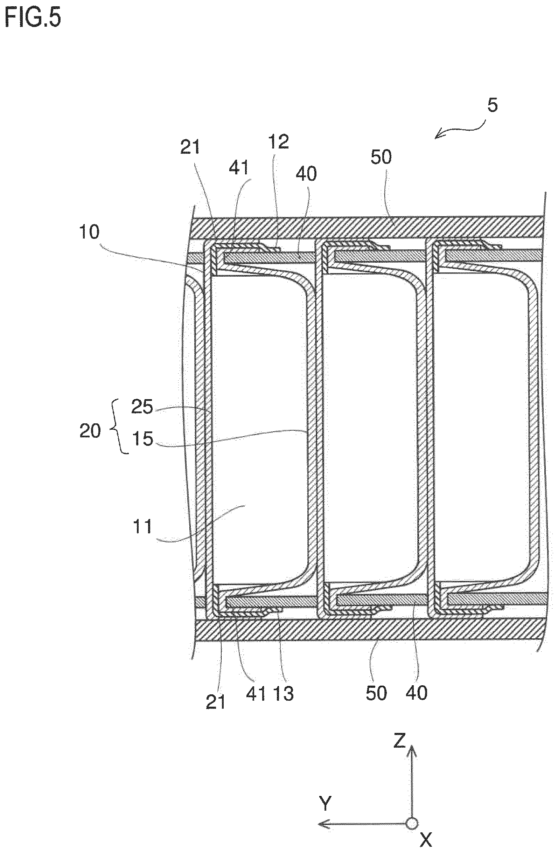

Fig. 3 and 4 are perspective views of the electricity storage device stack 5, Fig. 4 showing it without cooling plates 50. Fig. 5 is a sectional side view of the electricity storage device stack 5. The electricity storage device stack 5 includes a plurality of electricity storage devices 10 arranged side by side, circuit boards 40, and cooling plates 50.

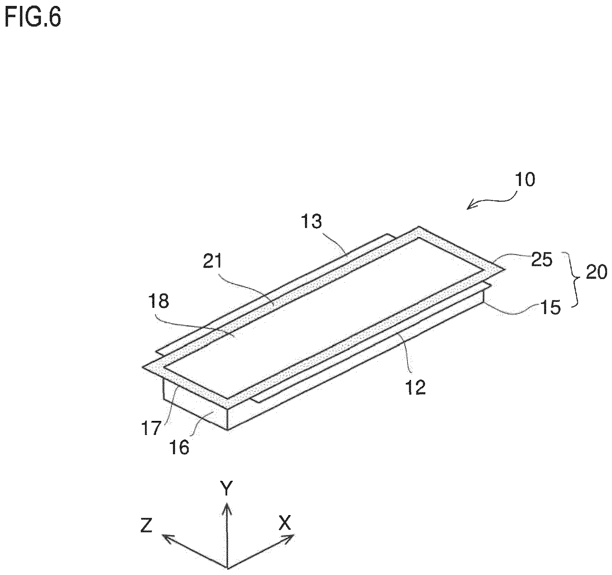

Each electricity storage device 10 is provided with a cathode electrode terminal 12 and an anode electrode terminal 13 (see Fig. 6), both formed of metal. When the electricity storage devices 10 are arrayed, the electrode terminals 12 are arrayed on the top-face side of the electricity storage device stack 5, and the electrode terminals 13 are arrayed on the bottom-face side of the electricity storage device stack 5. The polarities, cathode or anode, of the electrode terminals 12 and 13 may be reversed.

The circuit boards 40 are electrically connected to a plurality of electrode terminals 12 and 13, respectively, so that the plurality of electricity storage devices 10 can easily be connected in parallel with each other. The circuit boards 40 are disposed on the top and bottom faces, respectively, of the electricity storage devices 10 arranged side by side. Each circuit board 40 has slits 41, an electrode pattern 42, and a connection terminal 43. As many slits 41 as the number of electricity storage devices 10 arranged side by side are provided, and are arrayed along the Y direction (the direction along which the electricity storage devices 10 are arranged side by side). Each slit 41 is formed to penetrate the circuit board 40 along the Z direction (top-bottom direction), and extends along the X direction (see Fig. 5).

On the top face of the circuit board 40 disposed on the top-face side of the electricity storage device stack 5, an electrode pattern 42 to which a connection terminal 43 is connected is disposed. Peripheral seal portions 21 (described later) and the electrode terminals 12 are inserted through the slits 41. The peripheral seal portions 21 and the electrode terminals 12 inserted through the slits 41 are folded onto the top-face side of the circuit board 40. Tip parts of the electrode terminals 12 are bent to be electrically connected to the electrode pattern 42 by spot welding, soldering, or the like. Thus, the plurality of electrode terminals 12 are electrically connected to the connection terminal 43 via the electrode pattern 42.

On the bottom face of the circuit board 40 disposed on the bottom-face side of the electricity storage device stack 5, an electrode pattern (not illustrated) to which a connection terminal 43 is connected is disposed. Peripheral seal portions 21 and the electrode terminals 13 inserted through the slits 41 are folded onto the bottom-face side of the circuit board 40. Tip parts of the electrode terminals 13 are bent to be electrically connected to the electrode pattern by spot welding, soldering, or the like. Thus, the plurality of electrode terminals 13 are electrically connected to the connection terminal 43 via the electrode pattern (not illustrated).

Folding the peripheral seal portions 21 allows reducing the height of the electricity storage device stack 5. While in this embodiment the tip parts of the electrode terminals 12 and 13 are bent to be electrically connected to the electrode patterns, the former may instead be electrically connected to the latter by welding, without being bent.

The cooling plates 50 are disposed on the circuit boards 40 so as to lie in contact with the electrode terminals 12 and 13 respectively, and have refrigerant passages 51 inside them for circulation of refrigerant. To the refrigerant passages 51 are connected pipes extending from a radiator (not illustrated) mounted on the electric vehicle 1. The refrigerant is circulated by a refrigerant pump (not illustrated) to cool the electrode terminals 12 and 13 connected to the circuit boards 40. Here, bending the tip parts of the electrode terminals 12 and 13 allows increasing the area over which they face the cooling plates 50 and thus enhances cooling efficiency. The cooling plates 50 may instead be disposed close to the electrode terminals 12 and 13.

The electricity storage device stack 5 may be packed in a package container (not illustrated) to be formed into a package. In that case, the package container can be formed of a laminate material having a thermal adhesive resin layer, a metal foil, and a base layer laid over each other. The package container can be sealed by thermally bonding the thermal adhesive resin layer with the space between the electricity storage device stack 5 and the package container filled with a filling material (not illustrated). Or the package container may be formed as an injection-molded member.

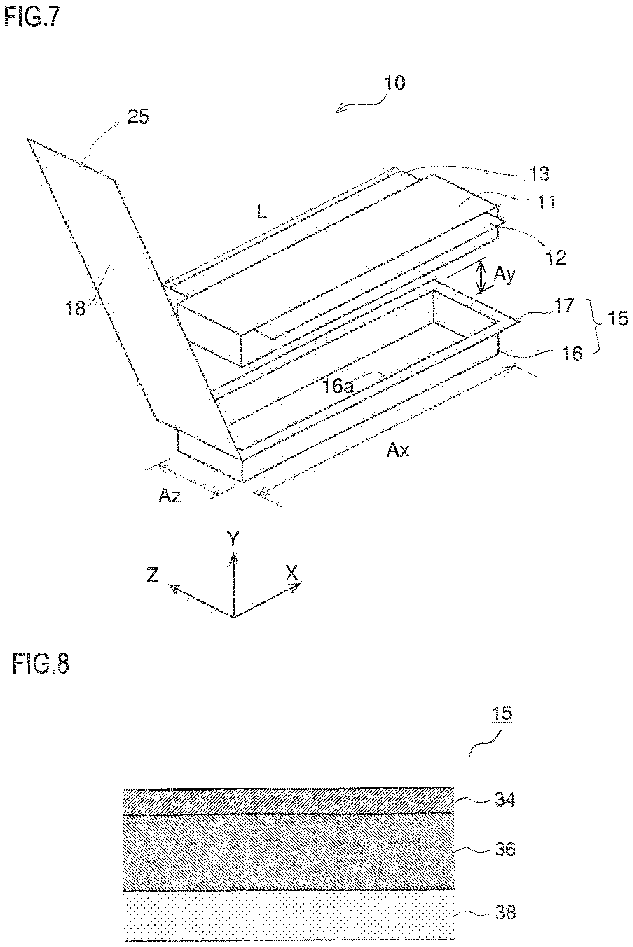

Figs. 6 and 7 are a perspective view and an exploded perspective view, respectively, of the electricity storage device 10. Fig. 6 shows the electricity storage device 10 as it is before being built into the electricity storage device stack 5. The electricity storage device 10 is a secondary cell having an electricity storage element 11 sealed in a package member 20. Used as the electricity storage device 10 is, for example, a lithium-ion cell, a lithium-ion-polymer cell, an all-solid lithium-ion cell, a lead storage cell, a nickel-hydride storage cell, a nickel-cadmium storage cell, a nickel-iron storage cell, a nickel-zinc storage cell, a silver oxide-zinc storage cell, a metal-air cell, or a polyvalent cation cell.

The electricity storage element 11 is formed by disposing a cathode plate and an anode plate (neither is shown) opposite each other across an electrically insulating separator (not shown). To the cathode and anode plates, electrode terminals 12 and 13 are connected respectively. The electricity storage element 11 can be formed by winding up a separator, a cathode plate, and an anode plate, all in an elongate form, laid over each other. The electricity storage element 11 can instead be formed by laying over each other a cathode plate, a separator, an anode plate, and a separator, all in a sheet form, in this order in a plurality of tiers. The electricity storage element 11 may instead be formed by folding up and thereby laying over each other a separator, a cathode plate, and an anode plate, all in an elongate form.

Between the cathode plate and the anode plate, an electrolyte is disposed. In this embodiment, the electrolyte is an electrolytic solution, and fills the inside of the package member 20. As the electrolyte, a solid electrolyte or a gel electrolyte may be used.

The package member 20 includes a packing material 15 and a packing material 25 each formed of a laminate material having a thermal adhesive resin layer 38 (see Fig. 8) on the inner face.

Fig. 8 is a sectional view showing the layered structure of the packing material 15. The packing material 25 has the same layered structure as the packing material 15. The packing materials 15 and 25 are each formed by laying over each other a base layer 34, a barrier layer 36, and the thermal adhesive resin layer 38 in this order. The packing materials 15 and 25 are preferably given a thickness of 50 µm or more with consideration given to mechanical strength, but 400 µm or less with consideration given to reducing the weight of the electricity storage device 10.

The base layer 34 is electrically insulating, and is formed of resin film such as of nylon, polyester, or polyethylene terephthalate. The thickness of base layer 34 is, for example, 10 µm or more but 75 µm or less. For enhanced heat resistance, the base layer 34 is preferably formed of a uniaxially stretched film or a biaxially stretched film.

For enhanced pinhole resistance, enhanced electrical insulation, and the like, the base layer 34 may be formed by laying over each other a plurality of resin films of different materials. In that case, the plurality of resin films are bonded together with polyurethane-based, acrylic, or other adhesive. In this embodiment, the base layer 34 is formed by laying together polyethylene terephthalate (with a thickness of 12 µm) and nylon (with a thickness of 15 µm) with adhesive (with a thickness of 4 µm).

The barrier layer 36 is formed of a metal foil, and prevents entry of moisture, oxygen, light, and the like. Examples of the metal for forming the barrier layer 36 include aluminum, aluminum alloys, stainless steel, and titanium. The thickness of the barrier layer 36 is, for example, 10 µm or more but 300 µm or less. The base layer 34 and the barrier layer 36 are bonded together with polyurethane-based, acrylic, or other adhesive (not shown). In this embodiment, the barrier layer 36 is formed of an aluminum foil with a thickness of 40 µm.

The thermal adhesive resin layer 38 may be formed of any resin that is thermally adhesive, and is formed of a thermally adhesive resin such as polypropylene, acid-modified polypropylene, low-density polyethylene, or straight-chain low-density polyethylene. The thermal adhesive resin layer 38 may be formed by laying over each other a plurality of resin layers of different materials. The thickness of the thermal adhesive resin layer 38 is, for example, 10 µm or more but 100 µm or less. The thermal adhesive resin layer 38 is formed by extrusion over the barrier layer 36. A film with which to form the thermal adhesive resin layer 38 may be bonded over the barrier layer 36 with adhesive.

In this embodiment, the thermal adhesive resin layer 38 is formed by extruding acid-modified polypropylene (with a thickness of 40 µm) and polypropylene (with a thickness of 40 µm) in this order over the barrier layer 36.

In Figs. 6 and 7, the package member 20 has the packing materials 15 and 25 formed continuously along the X direction into a single piece. The packing material 15 has a housing portion 16 and a flange portion 17. The packing material 15 has the housing portion 16 formed by cold-forming so as to be recessed with a predetermined depth relative to the flange portion 17. The housing portion 16 has, in one face of it, a substantially rectangular opening 16a, where the electricity storage element 11 is housed. The flange portion 17 is formed to protrude outward from the circumferential edge of the opening 16a. The packing material 25 is formed in a rectangular sheet form. The packing material 25 is thermally bonded to the flange portion 17 to form a lid portion 18 that covers the opening 16a.

Thermal bonding is performed with the electrode terminals 12 and 13 protruding outward from the opposite longer-side edges of the opening 16a, in a state held between the flange portion 17 and the lid portion 18. In designing the electricity storage element 11, reducing the distance between each pair of electrode terminals 12 and 13 helps reduce the internal resistance during charging and discharging. It is thus possible to provide an electricity storage device 10 capable of high-output discharging as well as high-speed charging.

The electrode terminals 12 and 13 can be given a larger width in proportion to the dimension Ax of the opening 16a along its longer-side (longitudinal) direction, and it is thereby possible to increase the electrical conductivity of the electrode terminals 12 and 13. It is hence possible to reduce heat generation in the electrode terminals 12 and 13. This permits application of a higher voltage during charging and thus allows faster charging. It is also possible, by reducing heat generation in the electrode terminals 12 and 13 and in the electricity storage element 11, to alleviate their deterioration. It is thus possible to provide an electricity storage device 10 that is less prone to deterioration through repeated charging and discharging with a high voltage. Moreover, allowing quick charging and discharging with a high voltage for a short time, the electricity storage device 10 can be used suitably as a motive power source in BEVs (battery electric vehicles) and PHEVs (plug-in hybrid electric vehicles) as well as HEVs (hybrid electric vehicles) and microhybrid vehicles with a 48-volt power supply.

The width L of the electrode terminals 12 and 13 along the X direction is greater than one-half of the dimension Ax of the opening 16a along its longer-side direction. Thus, the electrode terminals 12 and 13 are given a large width L compared with the capacity of the electricity storage device 10. This helps further reduce heat generation in the electrode terminals 12 and 13. Specifically, the electrode terminals 12 and 13 are given a width L of 5 cm or more but 100 cm or less, preferably 10 cm or more but 100 cm or less, and more preferably 15 cm or more but 100 cm or less. Giving the electrode terminals 12 and 13 a width L more than 100 cm leads to lower sealing performance around the electrode terminals 12 and 13. Though not illustrated in connection with this embodiment, the electrode terminals 12 and 13 are held between the flange portion 17 and the lid portion 18 via a tab film (not illustrated) that is thermally adhesive. This helps enhance sealing performance around the electrode terminals 12 and 13.

The dimension Ax of the opening 16a along its longer-side direction is 1.5 times or more but 30 times or less of its dimension Az along its shorter-side (lateral) direction. A dimension Ax less than 1.5 times the dimension Az leads to the electricity storage device 10 having a low capacity; giving the electricity storage device 10 a dimension Ax 1.5 times or more of the dimension Az permits it to have a high capacity. On the other hand, a dimension Ax more than 30 times the dimension Az makes the packing material 15 difficult to mold, and leads to a low yield rate; designing the dimension Ax to be 30 times or less of the dimension Az allows molding the packing material 15 at an improved yield rate. Moreover, designing the dimension Ax to be large compared with the dimension Az permits the electrode terminals 12 and 13 to have a greater width L, and leads to further enhanced electrical conductivity.

The electrode terminals 12 and 13 protrude outward from the outer edge of the flange portion 17 by 0.5 mm or more but 50 mm or less. If the electrode terminals 12 and 13 protrude from the outer edge of the flange portion 17 by more than 50 mm, that leads to low electrical conductivity. On the other hand, if they protrude from the outer edge of the flange portion 17 by less than 0.5 mm, that makes it difficult to connect the electrode terminals 12 and 13 to the circuit board 40.

The depth Ay of the housing portion 16 is determined according to the thickness of the barrier layer 36 in the packing material 15 so as not to develop cracks or the like during molding. In this embodiment, the housing portion 16 is given a depth of 5 mm to 10 mm compared with the barrier layer 36 with a thickness of 40 µm. Here, the housing portion 16 is formed so as to have, on planes perpendicular to the depth direction, corners rounded with a radius R of, for example, about 3 mm and, on planes parallel to the depth direction, corners rounded with a radius R of, for example, about 1.5 mm. Increasing the thickness of the barrier layer 36 permits giving the housing portion 16 a depth of, for example, 5 mm to 30 mm.

The electricity storage device 10 is disposed with the depth direction (Y direction) of the housing portion 16 aligned with the front-rear direction of the electric vehicle 1. The longer-side direction (X direction) of the opening 16a is aligned with the left-right direction of the electric vehicle 1, and the shorter-side direction (Z direction) of the opening 16a is aligned with the height direction of the electric vehicle 1.

Since the housing portion 16 is formed by cold-forming, its depth is difficult to increase. By contrast, the dimensions Ax and Az of the opening 16a along the two directions are easier to increase than its depth Ay along the depth direction. Accordingly, aligning the depth direction (Y direction) of the housing portion 16 with the front-rear direction of the electric vehicle 1 permits a plurality of electricity storage devices 10 to be installed without being stacked on each other to achieve the supply of desired electric power. It is thus possible to prevent breakage of the package member 20 due to increased weight resulting from stacking, and to enhance the reliability of the electricity storage device 10.

Moreover, aligning the shorter-side direction (Z direction) of the housing portion 16 with the height direction helps reduce the height of the electricity storage device 10 and enhance cabin comfort in the electric vehicle 1. Here, since the housing portion 16 is elongate along the X direction with its dimension Ax along the X direction greater than its dimension Az along the Z direction, it is possible to produce an electricity storage device 10 with a high capacity while restraining its height.

In a case where the electric vehicle 1 is of a sedan type or a compact car type, the electricity storage device stack 5 is given a height of, for example, 100 mm or less. In a case where the electric vehicle 1 is of an SUV type or a one-box type, the electricity storage device stack 5 is given a height of, for example, 150 mm or less.

The machine direction (MD) of the package member 20 (packing materials 15 and 25) is aligned with the Z direction (the direction orthogonal to the width direction of the electrode terminals 12 and 13). Folding a laminate material along a direction parallel to the machine direction tends to produce cracks in a metal foil and pinholes in a resin film. Here, however, owing to the machine direction of the packing materials 15 and 25 being orthogonal to the width direction of the electrode terminals 12 and 13, it is possible, when folding the peripheral seal portions 21 along the X direction as shown in Fig. 5 referred to previously, to prevent cracks and pinholes from developing in the package member 20.

The machine direction (MD) of the packing materials 15 and 25 corresponds to the rolling direction (RD) of the metal foil (such as a foil of an aluminum alloy) of the barrier layer 36. The transverse direction TD of the packing materials 15 and 25 corresponds to the transverse direction TD of the metal foil. It is possible to discriminate the rolling direction (RD) of a metal foil based on rolling traces.

On the other hand, it is possible to inspect, on a plurality of sectional planes, the thermal adhesive resin layer 38 in the packing materials 15 and 25 under an electron microscope to recognize a sea-island structure in order to identify as the MD the direction parallel to the sectional plane which has the maximum value of the average diameter of islands along the direction perpendicular to the thickness direction of the thermal adhesive resin layer 38. This method serves to identify the MD in a case where the MD of the packing materials 15 and 25 cannot be identified based on rolling traces on the metal foil.

Specifically, the thermal adhesive resin layer 38 is inspected to recognize a sea-island structure under an electron microscope on each of the following sectional planes (a total of 10 sectional planes): sectional planes in 10 directions 10-degrees apart from each other, the ten directions including the length direction of the thermal adhesive resin layer 38, the direction perpendicular to the length direction of the thermal adhesive resin layer 38, and eight directions between those two directions. Then for each island on each sectional plane, the diameter d of the island defined by a straight-line distance between opposite ends along the direction perpendicular to the thickness direction of the thermal adhesive resin layer 38 is measured. Next, for each sectional plane, the average of the 20 greatest island diameters d is calculated. The direction parallel to the sectional plane with the greatest average of island diameters d is identified as the MD.

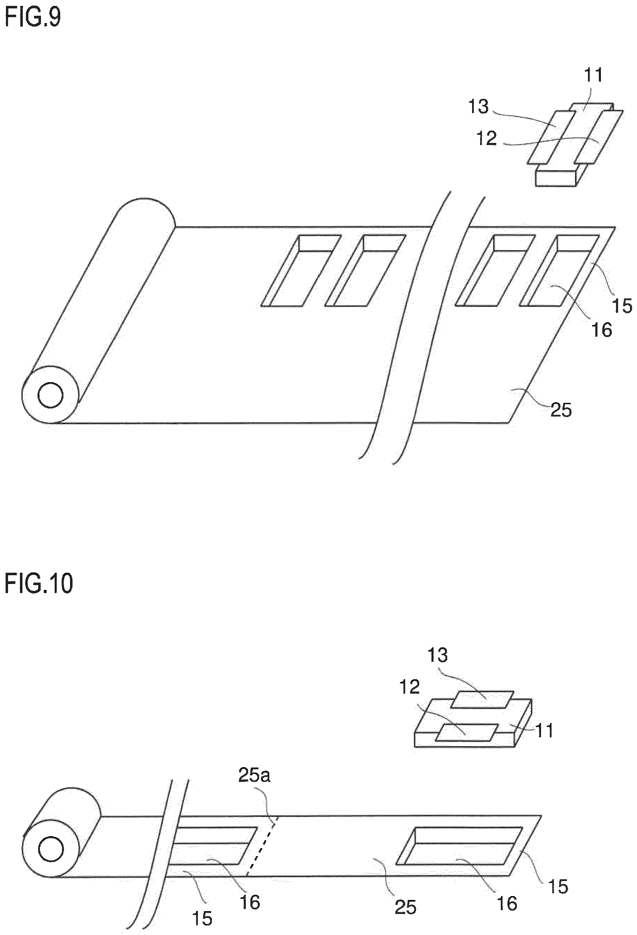

Fig. 9 is a diagram illustrating a procedure for fabricating the electricity storage device 10. The electricity storage device 10 is produced through a process of preparing the package member 20 by molding, followed by a process of packing the electricity storage element 11 in the package member 20.

In the molding process of molding the package member 20, by cold-forming, a plurality of recesses as housing portions 16 are formed at predetermined intervals in a laminate material in the form of a roll, in one end part of it along its width direction. This produces, along the machine direction (MD), a plurality of pairs of packing materials 15 and 25, each pair being continuous along the width direction. Here, the packing materials 15 and 25 are formed with the machine direction (MD) of the roll-form laminate material aligned with the Z direction. After that, electricity storage elements 11 are housed in the housing portions 16, and adjacent housing portions 16 are cut apart from each other.

In the packing process, the housing portion 16 having the electricity storage element 11 housed in it is filled with an electrolytic solution. Next, the packing material 25 is folded to cover the opening 16a, and the lid portion 18 of the packing material 25 is thermally bonded to the flange portion 17 of the packing material 15 (see Fig. 7). Thus a peripheral seal portion 21 is formed along the circumference of the housing portion 16 and the housing portion 16 is sealed. In this way, the electricity storage element 11 is packed in the package member 20.

Fig. 10 is a diagram illustrating a modified example of the procedure for fabricating the electricity storage device 10. In the molding process, in a case where a laminate material in the form of a small-width roll is used, by cold-forming, a plurality of recesses as the housing portion 16 are formed at a predetermined intervals along the machine direction (MD). This produces, along the machine direction (MD), a plurality of pairs of packing materials 15 and 25, each pair being continuous along the machine direction (MD). Here, the packing materials 15 and 25 are formed with the machine direction (MD) of the roll-form laminate material aligned with the X direction. After that, electricity storage elements 11 are housed in the housing portions 16, and adjacent housing portions 16 are cut apart from each other.

While, in this embodiment, the packing materials 15 and 25 are formed to be continuous, the packing materials 15 and 25 may instead be formed out of separate laminate materials each in the form of a roll.

According to this embodiment, a housing portion 16 of a package member 20 in which an electricity storage element 11 is housed has in one face of it a substantially rectangular opening 16a. The electricity storage element 11 has a pair of electrode terminals 12 and 13 protruding outward from opposite longer-side edges of the opening 16a. This makes it possible to fabricate the electricity storage element 11 with a reduced distance between the opposed electrode terminals 12 and 13. This helps reduce the internal resistance of the electricity storage element 11 during charging and discharging, and it is thus possible to provide an electricity storage device 10 capable of high-output discharging and high-speed charging. Moreover, the electrode terminals 12 and 13 can be formed with a larger width in proportion to the dimension of the opening 16a along its longer-side direction, and this increases electrical conductivity. It is thus possible to apply a higher voltage during charging and further reduce the charging time. It is also possible to reduce heat generation in the electrode terminals 12 and 13 and in the electricity storage element 11 and alleviate their deterioration.

The width L of the electrode terminals 12 and 13 is greater than one-half of the dimension Ax of the opening 16a along its longer-side direction. The dimension Ax of the opening 16a is 1.5 times or more but 30 times or less of the dimension Az of the opening 16a along its shorter-side direction. The width of the electrode terminals 12 and 13 is 5 cm or more but 100 cm or less. The electrode terminals 12 and 13 protrude from the outer edge of the flange portion 17 by 0.5 mm or more but 50 mm or less. It is thus possible to increase the electrical conductivity of the electrode terminals 12 and 13 while giving the electricity storage device 10 a satisfactory capacity.

The machine direction (MD) of the package member 20 (packing materials 15 and 25) is aligned with the Z direction (the direction orthogonal to the width direction of the electrode terminals 12 and 13). It is thus possible, when folding a peripheral seal portion 21 along the X direction, to prevent cracks and pinholes from developing in the package member 20.

An electricity storage device stack 5 having a plurality of electricity storage devices 10 arranged side by side along the depth direction (Y direction) of the housing portion 16 includes circuit boards 40 electrically connected to the electrode terminals 12 and 13 arrayed along the Y direction. The circuit boards 40 have slits 41 through which the electrode terminals 12 and 13 are inserted and electrode patterns 42 electrically connected to the electrode terminals 12 and 13 so inserted. It is thus possible to easily arrange the plurality of electricity storage devices 10 side by side.

Tip parts of the electrode terminals 12 and 13 protruding through the slits 41 are bent to be electrically connected to the electrode patterns 42. It is thus possible to reduce the height of the electricity storage device stack 5.

The electricity storage device stack further includes cooling plates 50 having inside them refrigerant passages 51 through which refrigerant is circulated and disposed over the circuit boards 40. It is thus possible to cool the electrode terminals 12 and 13 efficiently.

The electricity storage device 10 is disposed with the depth direction (Y direction) of the housing portion 16 aligned with the front-rear direction of the electric vehicle (mobile body) 1. The longer-side direction (X direction) of the opening 16a is aligned with the front-rear direction of the electric vehicle (mobile body) 1, and the shorter-side direction (Z direction) of the opening 16a is aligned with the height direction of the electric vehicle (mobile body) 1. It is thus possible to install a plurality of electricity storage devices 10 without stacking them on each other to achieve the supply of desired electric power. It is thus possible to prevent breakage of the package member due to increased weight resulting from stacking, and to enhance the reliability of the electricity storage device 10.

### < Second Embodiment >

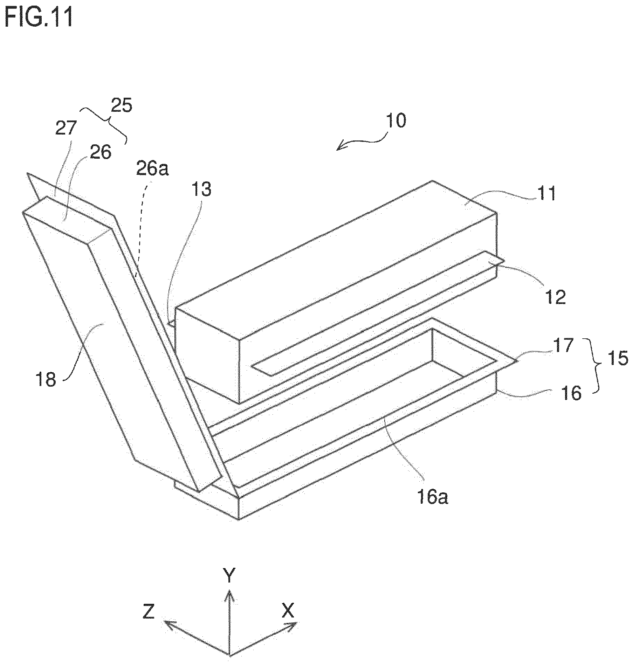

Fig. 11 is an exploded perspective view of an electricity storage device 10 according to a second embodiment. For convenience' sake, such parts in this embodiment as find their counterparts in the previously-described first embodiment shown in Figs. 1 to 10 are identified by the same reference signs. This embodiment differs from the first embodiment in the shape of the packing material 25, and is otherwise similar to the first embodiment.

Like the packing material 15, the packing material 25 has a housing portion 26 and a flange portion 27. The housing portion 26 has, in one face of it, a substantially rectangular opening 26a. The electricity storage element 11 is housed in the housing portion 16 of the packing material 15 and the housing portion 26 of the packing material 25. The flange portion 27 is formed to protrude outward from the circumferential edge of the opening 26a.

The thermal adhesive resin layers 38 (see Fig. 6) in the flange portions 17 and 27 are thermally bonded together to form an annular peripheral seal portion 21 along the circumference of the housing portions 16 and 26. Thus the housing portions 16 and 26, which are formed with a predetermined depth from the inner edge of the peripheral seal portion 21, are sealed by the peripheral seal portion 21. The total depth of the housing portions 16 and 26 is preferably 30 mm or less.

The electricity storage device 10 is disposed with the depth direction (Y direction) of the housing portions 16 and 26 aligned with the front-rear direction of the electric vehicle 1. The longer-side direction (X direction) of the opening 26a is aligned with the left-right direction of the electric vehicle 1, and its shorter-side direction (Z direction) is aligned with the height direction of the electric vehicle 1.

In this way, it is possible to obtain benefits similar to those of the first embodiment. Moreover, owing to the packing materials 15 and 25 having the housing portions 16 and 26 respectively, it is possible to increase the volume of the electricity storage element 11 and increase the capacity of the electricity storage device 10. It is thus possible to reduce the number of electricity storage devices 10 that constitute the electricity storage device stack 5 (see Fig. 4), and thereby to reduce the man-hours for the production of the electricity storage device stack 5.

### < Third Embodiment >

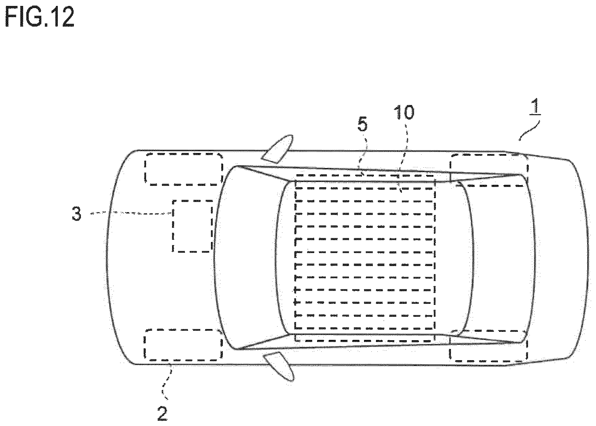

Fig. 12 is a top view of an electric vehicle 1 according to a third embodiment. For convenience' sake, such parts in this embodiment as find their counterparts in the previously-described first embodiment shown in Figs. 1 to 10 are identified by the same reference signs. This embodiment differs from the first embodiment in how the electricity storage device stack 5 is disposed, and is otherwise similar to the first embodiment.

The electricity storage device stack 5 is installed under the floor of the body of the electric vehicle 1, and is disposed such that the direction along which the electricity storage devices 10 are arranged side by side is aligned with the left-right direction of the electric vehicle 1. Thus, the electricity storage device 10 is disposed with the depth direction (Y direction) of the housing portion 16 (see Fig. 6) aligned with the left-right direction of the electric vehicle 1. The longer-side direction (X direction) of the opening 16a is aligned with the front-rear direction of the electric vehicle 1, and the shorter-side direction (Z direction) of the opening 16a is aligned with the height direction of the electric vehicle 1.

It is thus possible to install a plurality of electricity storage devices 10 without stacking them on each other to achieve the supply of desired electric power. It is thus possible to obtain benefits similar to those of the first embodiment. In addition, when the electric vehicle 1 is running, the air taken in through the front grille at the front passes rearward and makes contact with the individual electricity storage devices 10 in the electricity storage device stack 5. It is thus possible to cool the electricity storage devices 10.

The electricity storage devices 10 according to the second embodiment may be installed in the electric vehicle 1 such that the direction in which the electricity storage devices 10 are arranged side by side is aligned with the left-right direction of the electric vehicle 1.

While in the above description the electricity storage device 10 that supplies the driving motor 3 with electric power is a secondary battery, it may instead be a capacitor (electrolytic capacitor, electrical double layer capacitor, lithium-ion capacitor, or the like).

While in the above description an electric vehicle is taken as one example of a mobile body, the electricity storage device stack 5 may be incorporated in any other mobile bodies. For example, the electricity storage device stack 5 can be incorporated in two-legged robots, railway cars, aircrafts, helicopters, drones, agricultural machines, construction machines, and the like.

How the electricity storage device 10 is installed in a mobile body can be changed according to the structure of the mobile body. For example, the depth direction (Y direction) of the housing portion 16 of the electricity storage device 10 may be aligned with the height direction of the body of the mobile body. In that case, a plurality of electricity storage devices 10 are stacked along the height direction of the mobile body, and the electrode terminals 12 and 13 extend in a horizontal direction. This helps prevent a lopsided distribution of the electrolyte filling inside the package member 20 around one of the electrode terminals 12 and 13.

The electricity storage device 10 and the electricity storage device stack 5 may be used other than as a driving source for a mobile body. They may be used as stationary electric power sources in, for example, energy storage systems, battery energy storage systems, and uninterruptible power supplies.

### Industrial Applicability

The present invention finds applications widely in mobile bodies that incorporate electricity storage devices.

### Reference Signs List

- 1: electric vehicle (mobile body)
- 2: wheel
- 3: driving motor
- 5: electricity storage device stack
- 10: electricity storage device
- 11: electricity storage element
- 12, 13: electrode terminal
- 15, 25: packing material
- 16, 26: housing portion
- 16a, 26a: opening
- 17, 27: flange portion
- 18: lid portion
- 20: package member
- 21: peripheral seal portion
- 34: base layer
- 36: barrier layer
- 38: thermal adhesive resin layer
- 40: circuit board
- 41: slit
- 42: electrode pattern
- 43: connection terminal
- 50: cooling plate
- 51: refrigerant passages

## Claims

1. An electricity storage device having an electricity storage element sealed in a package member formed of a laminate material including a thermal adhesive resin layer, wherein
the package member has:
a housing portion having in one face thereof a substantially rectangular opening and formed to have a predetermined depth, the housing portion housing the electricity storage element;
a flange portion protruding outward from a circumferential edge of the opening; and
a lid portion covering the opening and thermally bonded to the flange portion, and
the electricity storage element has a pair of electrode terminals protruding outward respectively from opposite longer-side edges of the opening and held between the flange portion and the lid portion.

2. The electricity storage device according to claim 1, wherein
a width of the electrode terminals is greater than one-half of a dimension of the opening along a longer-side direction thereof.

3. The electricity storage device according to claim 1 or 2, wherein
a dimension of the opening along a longer-side direction thereof is 1.5 times or more but 30 times or less of a dimension of the opening along a shorter-side direction thereof.

4. The electricity storage device according to any one of claims 1 to 3, wherein
a width of the electrode terminals is 5 cm or more but 100 cm or less.

5. The electricity storage device according to any one of claims 1 to 4, wherein
the electrode terminals protrude from an outer edge of the flange portion by 0.5 mm or more but 50 mm or less.

6. The electricity storage device according to any one of claims 1 to 5, wherein
a machine direction of the package member is orthogonal to a width direction of the electrode terminals.

7. An electricity storage device stack, comprising:
a plurality of the electricity storage devices according to any one of claims 1 to 6 arranged side by side along a depth direction of the housing portion; and
a circuit board electrically connected to the electrode terminals arrayed along the depth direction of the housing portion,
wherein
the circuit board has:
slits through which the electrode terminals are inserted; and
an electrode pattern electrically connected to the electrode terminals inserted through the slits.

8. The electricity storage device stack according to claim 7, wherein
tip parts of the electrode terminals protruding through the slits are bent to be electrically connected to the electrode pattern.

9. The electricity storage device stack according to claim 7 or 8, further comprising:
a cooling plate having inside it a refrigerant passage through which refrigerant is circulated, the cooling plate being disposed over the circuit board so as to lie in contact with or close to the electrode terminals.

10. A mobile body, comprising:
the electricity storage device stack according to any one of claims 7 to 9; and
a driving motor supplied with electric power from the electricity storage device stack,
the mobile body being driven by the driving motor,
wherein
the depth direction of the housing portion is aligned with a front-rear direction of a body of the mobile body,
a longer-side direction of the opening is aligned with a left-right direction of the body of the mobile body, and
a shorter-side direction of the opening is aligned with a height direction of the body of the mobile body.

11. A mobile body, comprising:
the electricity storage device stack according to any one of claims 7 to 9; and
a driving motor supplied with electric power from the electricity storage device stack,
the mobile body being driven by the driving motor,
wherein
the depth direction of the housing portion is aligned with a left-right direction of a body of the mobile body,
a longer-side direction of the opening is aligned with a front-rear direction of the body of the mobile body, and
a shorter-side direction of the opening is aligned with a height direction of the body of the mobile body.

12. A mobile body, comprising:
the electricity storage device stack according to any one of claims 7 to 9; and
a driving motor supplied with electric power from the electricity storage device stack,
the mobile body being driven by the driving motor,
wherein
the depth direction of the housing portion is aligned with a height direction of a body of the mobile body.
